(19) Europäisches Patentamt
European Patent Office
Office européen des brevets

(11) **EP 3 074 726 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(21) Anmeldenummer: **14830501.4**

(22) Anmeldetag: **25.11.2014**

(51) Int Cl.:
***G01D 5/22*** *(2006.01)*       ***G01D 5/244*** *(2006.01)*

(86) Internationale Anmeldenummer:
**PCT/DE2014/100413**

(87) Internationale Veröffentlichungsnummer:
**WO 2015/078448 (04.06.2015 Gazette 2015/22)**

(54) **INDUKTIVER MESSTASTER UND VERFAHREN ZUM BETREIBEN EINES INDUKTIVEN MESSTASTERS**

INDUCTIVE MEASURING PROBE AND METHOD FOR OPERATING AN INDUCTIVE MEASURING PROBE

PALPEUR DE MESURE INDUCTIF ET PROCÉDÉ PERMETTANT DE FAIRE FONCTIONNER UN PALPEUR DE MESURE INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2013   DE 102013113073**

(43) Veröffentlichungstag der Anmeldung:
**05.10.2016   Patentblatt 2016/40**

(73) Patentinhaber: **ADDI-DATA GMBH**
**77836 Rheinmünster (DE)**

(72) Erfinder:
• **SOHLER, Jean-Louis**
  **F-67450 Mundolsheim (FR)**
• **OHLMANN, René**
  **F-67500 Batzendorf (FR)**

(74) Vertreter: **Geitz Truckenmüller Lucht Christ**
**Patentanwälte PartGmbB**
**Werthmannstrasse 15**
**79098 Freiburg (DE)**

(56) Entgegenhaltungen:
EP-A2- 1 058 094       DE-A1- 4 031 931
DE-A1- 4 033 252       DE-A1- 10 322 447
US-B2- 7 482 803       US-B2- 7 538 544

EP 3 074 726 B1

**Beschreibung**

Die Erfindung geht aus von einem Verfahren zum Betreiben eines induktiven Messtasters mit einem beweglich angeordneten Tastelement und mit einem Sensor mit mindestens einer Spule und einem bezogen auf die Spule verschiebbar angeordneten, mit dem Tastelement verbundenen Kern.

Induktive Messtaster werden beispielsweise zur Längenmessung in der industriellen Fertigung, der Qualitätssicherung, der Prozesskontrolle, der Robotertechnik, der Luft- und Raumfahrt, der Automobilindustrie und bei hydraulischen und pneumatischen Anwendungen eingesetzt. Neben Längen oder Strecken können mit diesen Vorrichtungen auch die von Strecken ableitbaren Größen wie beispielsweise die Form eines Gegenstands bestimmt werden. Der Messbereich reicht vom Nanometerbereich bis in den Meterbereich. Das Prinzip der Längenmessung beruht darauf, dass das Tastelement mit einem Kern verbunden ist, der relativ zu einer Spulenanordnung verschiebbar angeordnet ist. Eine Verschiebung des Kerns relativ zu der Spulenanordnung bewirkt eine Änderung der Induktivität der Spulenanordnung. Die die Spulen aufweisende Messeinrichtung des induktiven Messtasters kann insbesondere als induktive Halbbrücke, als Vollbrücke oder als Differentialtransformator ausgebildet sein. Eine mit einer sinusförmigen Erregerspannung gespeiste Primärspule wird dabei über einen magnetisch wirksamen Kern mit einer oder zwei Sekundärspulen gekoppelt. Die Primärspule, die Sekundärspulen und der magnetisch wirksame Kern sind dabei in den Messtaster integriert. Verändert der mit dem Tastelement verbundene Kern bei der Längenmessung seine Position, so wirkt sich dies auf die magnetische Kopplung zwischen der Primärspule und der Sekundärspule aus. Dabei ist die in der Sekundärspule induzierte Spannung linear von der Position des beweglichen Kerns abhängig. Die Spannung der Sekundärspule ist daher ein Maß für die Positionsänderung des Tastelements. Darüber hinaus beeinflusst eine Änderung der Induktivität auch die Amplitude des Schwingkreises. Eine Positionsänderung des Kerns führt daher auch zu einer Amplitudenänderung, welche nachgewiesen werden kann und ein Maß für den zu messenden Weg darstellt.

Aus der DE 40 31 931 A1 ist ein induktiver Längenmesstaster mit einem Grundkörper, einer mit Wechselspannung beaufschlagten Primärwicklung, einer Sekundärwicklung mit Auswerteelektronik, einer ferromagnetischen Rückschlusseinrichtung zwischen der Primär- und der Sekundärwicklung und einer verschiebbaren Taststange bekannt. Sämtliche in dem Feld der Primärwicklung befindlichen Teile der ferromagnetischen Rückschlusseinrichtung sind im Grundkörper ortsfest angeordnet sind.

Die US 7 482 803 B2 offenbart einen induktiven Linear- oder Drehpositionssensor, der mit einer Erregerspule, einer Empfängerspule mit mehreren Abschnitten oder mit mehreren Empfängerspulen zur Erzeugung eines von der Position des Kopplerelements abhängigen Signals ausgestattet ist.

Die EP 1 058 094 A2 offenbart einen magnetischen Sensor zum Nachweis einer Verschiebung einer Rotationsachse, insbesondere bei Fahrzeug-Getrieben.

Die US 7 538 544 B2 offenbart einen nichtleitender, induktiver Positionssensor, der eine Transmitterspule und eine Empfängerspule umfasst und zur Positionsmessung eines beweglichen Teils, beispielsweise eines drehbaren Gaspedals eingesetzt wird.

Die DE 40 33 252 A1 offenbart ein Verfahren und eine Vorrichtung zur berührungslosen Wegmessung insbesondere in Umgebungen mit hohem Staubanfall und Feuchtigkeit. Die Vorrichtung weist eine von einer Wechselspannungsquelle betriebene Sendespule, eine Sensorspule, in deren Einflussbereich sich ein ferromagnetischer Kern befindet, und eine zweite Sensorspule, welche als Referenzspule dient und sich außerhalb des Einflussbereichs des Kerns befindet, auf.

Die DE 103 22 447 A1 offenbart eine Positionsmessvorrichtung und ein Verfahren zur Positionsermittlung mit einer induktiv wirksamen Sensoreinheit und einer elektronischen Versorgungs- und Auswertungseinheit. Die Sensoreinheit umfasst eine Spulenanordnung mit zwei in Reihe geschalteten Messpulen mit einem zwischen den Messpulen angeordneten Spannungsabgriff und einem relativ zu den Messpulen beweglichen Positionsgeber in Form eines Messkörpers. Die Spulenanordnung ist als elektrischer Schwingkreis ausgebildet. Die Spulenanordnung wird mit einem Spannungsimpuls beaufschlagt. Die Position des Positionsgebers relativ zu den Messpulen wird anhand der Zeitantwort der Ausgangsspannung $\Delta U_1$ am Spannungsabgriff auf den eingangsseitigen Spannungsimpuls bestimmt. Die Positionsmessvorrichtung weist ferner eine Temperatursensorschaltung mit zwei in Reihe geschalteten Widerständen mit einem mittleren Spannungsabgriff und einem Kondensator auf, welcher zu einem der Widerstände parallel geschaltet ist. Die Temperatursensorschaltung wird eingangsseitig mit einem Spannungsimpuls beaufschlagt. Die Zeitantwort der Ausgangsspannung $\Delta U_2$ an dem Spannungsabgriff wird gemessen und aus dieser die Temperatur zur Temperaturkompensation bestimmt.

Als nachteilig erweist sich, dass insbesondere bei Messungen im Mikro- und Nanometerbereich Störeffekte des Sensors, der Ansteuerungseinrichtung und der Verarbeitungseinrichtung das Messergebnis erheblich verfälschen, so dass hohe Ungenauigkeiten auftreten.

Der Erfindung liegt die Aufgabe zugrunde, einen induktiven Messtaster und ein Verfahren zum Betreiben eines induktiven Messtasters zur Verfügung zu stellen, die insbesondere im Mikro- und Nanometerbereich möglichst exakte und genaue Messergebnisse liefern.

Diese Aufgabe wird durch ein Verfahren mit den Merkmalen des Anspruchs 1 gelöst. Der induktive Messtaster zeichnet sich dadurch aus, dass er zusätzlich zu dem Sensor mit einem elektrischen Referenzbauelement ausgestattet ist, welches eine analoge Eingangsspannung in eine analoge Ausgangsspannung umwandelt. Eine Ansteuerungseinrichtung erzeugt eine identische analoge Eingangsspannung für den Sensor und das Referenzbauelement. Eine Verarbeitungseinrichtung verknüpft das analoge Messsignal des Sensors und die analoge Ausgangsspannung des Referenzbauelements zu einem rauscharmen und exakten Messergebnis. Der Sensor, das Referenzbauelement, die Ansteuerungseinrichtung und die Verarbeitungseinrichtung sind Bestandteil einer Schaltungsanordnung. Das Messsignal des Sensors wird zu verschiedenen Messzeitpunkten erfasst. Zu jedem der Messzeitpunkte wird zeitgleich die Ausgangsspannung des Referenzbauelements bestimmt. Aus der Ausgangsspannung des Referenzbauelements mehrerer Messzeitpunkte wird ein Referenzwert oder eine Referenzfunktion gebildet. Zu jedem Messzeitpunkt wird das Messsignal des Sensors mit einem Korrekturwert oder mit einer Korrekturfunktion korrigiert, der aus der Ausgangsspannung des Referenzbauelements zu dem gleichen Messzeitpunkt und dem Referenzwert oder der Referenzfunktion bestimmt wird.

Es wird davon ausgegangen, dass die Störeffekte, welche das Messsignal des Sensors beeinflussen, im wesentlichen identisch sind zu den Störeffekten, die die Ausgangsspannung des Referenzbauelements beeinflussen. Hierzu wird das Referenzbauelement mit der gleichen analogen Einsgangsspannung versorgt wie der Sensor. Ferner werden die Ausgangsspannung des Referenzbauelements und das Messsignal des Sensors von einer gemeinsamen Verarbeitungseinrichtung verarbeitet. Einflüsse der Anregungseinrichtung und der Verarbeitungseinrichtung sind somit auf den Sensor und das Referenzbauelement identisch. Elektrische Störeffekte, welche sich auf die Ausgangsspannung des Referenzbauelements und auf das Messsignal auswirken, sind somit gleich.

Das Messsignal wird ferner von Störeffekten des Sensors beeinflusst. Um die Störeffekte des Sensors ebenfalls im Messsignal eliminieren oder zumindest minimieren zu können, wird ein Referenzbauelement gewählt, dessen elektrische Eigenschaften insbesondere hinsichtlich der Impedanz zumindest näherungsweise mit denjenigen des Sensors übereinstimmen. Vorteilhafterweise ist die Impedanz des Sensors im Nullpunkt zumindest in der Größenordnung identisch mit der Impedanz des Referenzbauelements. Unter dieser Voraussetzung kann angenommen werden, dass die Störeffekte des Sensors im wesentlichen mit den Störeffekten des Referenzbauelements übereinstimmen.

Das Referenzbauelement simuliert den Sensor hinsichtlich seiner elektrischen Eigenschaften. Daraus wird der Schluss gezogen, dass die Störeffekte, die das Referenzbauelement und die Ausgangsspannung des Referenzbauelements beeinflussen, im wesentlichen gleich sind wie die Störeffekte, die den Sensor und das Messsignal des Sensors beeinflussen.

Aus der zeitgleich zu den Messsignalen bestimmten Ausgangsspannung des Referenzbauelements zu einer vorgegebenen Eingangsspannung können mit dem Referenzbauelement die Störeffekte, die das Messsignal beeinflussen, bestimmt werden. Mit Hilfe der Verarbeitungseinrichtung können diese Störeffekte aus dem Messsignal herausgerechnet werden. Auf diese Weise erhält man ein sehr genaues und exaktes Messergebnis.

Von Vorteil ist ferner, wenn die Komponenten des Schaltkreises möglichst wenige Störeffekte aufweisen und die Störeffekte der Komponenten das Messsignal möglichst wenig beeinflussen. Hierzu werden besonders geeignete und rauscharme Komponenten eingesetzt.

Nach einer vorteilhaften Ausgestaltung ist das Referenzbauelement ein Transformator. Dieser weist ebenso wie der Sensor eine Spulenan-ordnung auf. Durch das Wicklungsverhältnis der Spulenanordnung wird das Verhältnis aus Eingangsspannung zu Ausgangsspannung bestimmt. Daher ist bei einem Transformator bei einer vorgegebenen Eingangsspannung Ausgangsspannung definiert.

Nach einer weiteren vorteilhaften Ausgestaltung ist der Transformator ein Äquivalenz-Transformator.

Nach einer weiteren vorteilhaften Ausgestaltung weist das Referenzbauteil eine Induktivität auf, die im wesentlichen mit der Induktivität des Sensors an einem Referenzpunkt übereinstimmt. Der Referenzpunkt entspricht dabei der Position des Kerns, bei der das Tastelement nicht ausgelenkt ist. Besonders genaue und exakte Messergebnisse können erzielt werden, wenn die Induktivität des Referenzbauelements zumindest hinsichtlich der Größenordnung mit der Induktivität des Sensors im Referenzpunkt übereinstimmt.

Nach einer weiteren vorteilhaften Ausgestaltung ist die Verarbeitungseinrichtung mit einem Verstärker für das Messsignal des Sensors und mit einem Verstärker für die Ausgangsspannung des Referenzbauelements ausgestattet. Vorteilhafterweise stimmen die beiden Verstärker überein. Sie sind identisch ausgebildet. Für diesen Fall ist der Einfluss des Verstärkers auf das Messsignal vergleichbar mit dem Einfluss des Verstärkers auf die Ausgangsspannung des Referenzbauelements. Dies gilt auch für Störeffekte.

Nach einer weiteren vorteilhaften Ausgestaltung ist der Verstärker ein rauscharmer Operationsverstärker.

Nach einer weiteren vorteilhaften Ausgestaltung ist die Verarbeitungseinrichtung mit einem Filter für das Messsignal des Sensors und mit einem Filter für die Ausgangsspannung des Referenzbauelements ausgestattet. Besonders bevorzugt handelt es sich hierbei um ein Tiefpassfilter.

Nach einer weiteren vorteilhaften Ausgestaltung stimmt das Filter für das Messsignal des Sensors im wesentlichen mit dem Filter für die Ausgangsspannung des Referenzbauelements überein. In diesem Fall ist der Einfluss des Filters auf das Messsignal vergleichbar mit dem Einfluss des Filters auf die Ausgangsspannung des Referenzbauelements. Dies gilt auch für Störeffekte.

Nach einer weiteren vorteilhaften Ausgestaltung sind die Filter rauscharm.

Nach einer weiteren vorteilhaften Ausgestaltung ist die Verarbeitungseinrichtung mit mindestens einem Analog/ Digital-Wandler für das analoge Sensorsignal und mit mindestens einem Analog/ Digital-Wandler für die analoge Ausgangsspannung des Referenzbauelements ausgestattet. Das Messsignal des Sensors und die Ausgangsspannung des Referenzbauelements werden zu den Messzeitpunkten zeitgleich erfasst und in den Analog/ Digital-Wandlern zeitgleich gewandelt. Es erfolgt damit ein synchrones Abtasten.

Das erfindungsgemäße Verfahren mit den Merkmalen des Anspruchs 1 zeichnet sich dadurch aus, dass bei einem induktiven Messtaster, welcher ein Tastelement, einen Sensor mit einer Spule und einem mit dem Tastelement verbundenen, gegenüber der Spule beweglichen Kern, ein Referenzbauelement, welches eine analoge Eingangsspannung in eine analoge Ausgangsspannung umwandelt, eine Ansteuerungseinrichtung und eine Verarbeitungseinrichtung aufweist, durch die Ansteuerungseinrichtung eine identische analoge Eingangsspannung für den Sensor und das Referenzbauelement erzeugt wird. Die Verarbeitungseinrichtung verarbeitet das analoge Messsignal des Sensors und die analoge Ausgangsspannung des Referenzbauelements zu einem rauscharmen Messergebnis. Hierzu werden zu mehreren Messzeitpunkten zeitgleich das Messsignal des Sensors und die Ausgangsspannung des Referenzbauelements erfasst. Aus der Ausgangsspannung des Referenzbauelements zu mehreren Messzeitpunkten wird ein Referenzwert gebildet. Zu jedem Messzeitpunkt wird das Messsignal des Sensors mit einem Korrekturwert zu einem Messergebnis verrechnet. Der Korrekturwert wird aus der Ausgangsspannung des Referenzbauelements zu dem gleichen Messzeitpunkt und dem Referenzwert bestimmt. Unter der Annahme, dass der Einfluss der Störeffekte auf das Ausgangssignal des Referenzbauelements im wesentlichen mit dem Einfluss der Störeffekte auf das Messsignal übereinstimmt, wird das Messsignal mit einem von den Störeffekten abhängigen Korrekturwert verrechnet. Dies erfolgt mittels der Verarbeitungseinrichtung.

Auf diese Weise werden die Störeffekte im Messsignal minimiert oder sogar eliminiert.

Statt eines Referenzwertes kann aus der Ausgangsspannung des Referenzbauelements zu mehreren Messpunkten eine Referenzfunktion gebildet werden, die von bestimmten Parametern abhängt.

Zu jedem Messzeitpunkt kann das Messsignal des Sensors mit einer Korrekturfunktion statt mit einem Korrekturwert zu einem Messergebnis verrechnet werden. Die Korrekturfunktion kann aus der Ausgangsspannung des Referenzbauelements zu dem gleichen Messzeitpunkt und dem Referenzwert oder der Referenzfunktion bestimmt werden und hängt von bestimmten Parametern ab.

Der Referenzwert wird als Mittelwert der Ausgangsspannungen des Referenzbauelements zu mehreren Messzeitpunkt gebildet.

Nach einer weiteren vorteilhaften Ausgestaltung der Erfindung wird der Korrekturwert des Messsignals zu einem Messzeitpunkt als Differenz aus dem Referenzwert und der Ausgangsspannung des Referenzbauelements zu dem gleichen Messzeitpunkt gebildet.

Nach einer weiteren vorteilhaften Ausgestaltung der Erfindung wird zur Korrektur des Messsignals des Sensors zu einem Messzeitpunkt der zu dem gleichen Messzeitpunkt bestimmte Korrekturwert von dem Messsignal abgezogen.

Nach einer weiteren vorteilhaften Ausgestaltung der Erfindung werden das Messsignal des Sensors und die Ausgangsspannung des Referenzbauelements durch zwei identische Verstärker verstärkt. Dabei sind die Störeffekte der Verstärker klein gegenüber den Störeffekten des Sensors.

Nach einer weiteren vorteilhaften Ausgestaltung der Erfindung werden das Messsignal des Sensors und die Ausgangsspannung des Referenzbauelements durch zwei identische Filter gefiltert. Die Störeffekte des Filters werden aus der Ausgangsspannung des Referenzbauelements bestimmt und aus dem Messsignal des Sensors eliminiert oder in dem Messsignal des Sensors minimiert.

Nach einer weiteren vorteilhaften Ausgestaltung der Erfindung werden das Messsignal des Sensors und die Ausgangsspannung des Referenzbauelements durch zwei identische Analog/ Digital-Wandler gewandelt. Die Störeffekte der Analog/ Digital-Wandler werden aus der Ausgangsspannung des Referenzbauelements bestimmt und aus dem Messsignal des Sensors eliminiert oder in dem Messsignal des Sensors minimiert.

Weitere Vorteile und vorteilhafte Ausgestaltungen der Erfindung sind der nachfolgenden Beschreibung, der Zeichnung und den Ansprüchen entnehmbar.

Zeichnung

In der Zeichnung ist ein Ausführungsbeispiel der Erfindung dargestellt. Es zeigen:

Figur 1    Schaltungsanordnung eines induktiven Messtasters,

Figur 2    Schaltplan eines Sensors des induktiven Messtasters gemäß Figur 1,

Figur 3    Schaltplan eines Referenzbauelements des induktiven Messtasters gemäß Figur 1.

Beschreibung des Ausführungsbeispiels

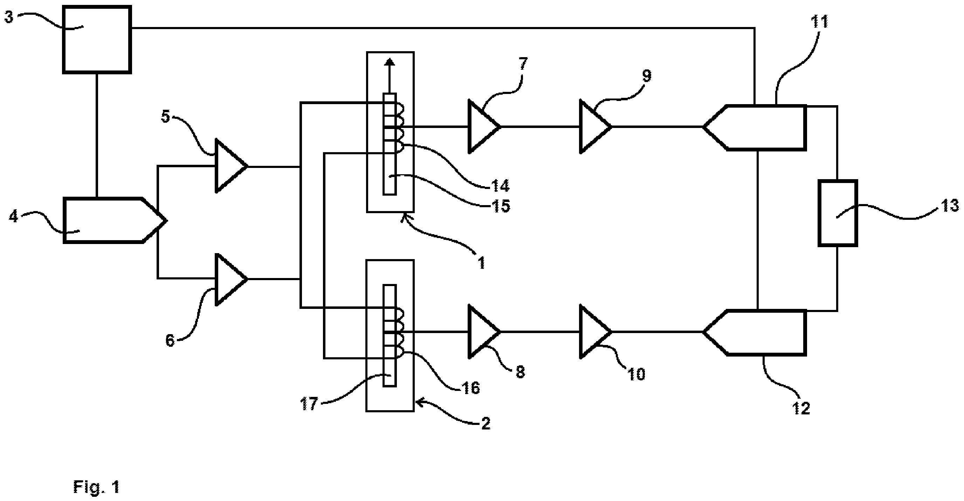

In Figur 1 ist eine Schaltungsanordnung eines induktiven Messtasters dargestellt. Die Schaltungsanordnung umfasst einen Sensor 1, ein elektrisches Referenzbauelement 2, eine Ansteuerungseinrichtung und eine Verarbeitungseinrichtung. Zu der Ansteuerungseinrichtung gehören eine Spannungsquelle 3, ein Digital/ Analog-Wandler 4 und zwei Verstärker 5, 6. Zu der Verarbeitungseinrichtung gehören zwei Verstärker 7, 8, zwei Filter 9, 10, zwei Analog/ Digital-Wandler 11, 12 und ein Prozessor 13.

Die Spannungsquelle 3, der Digital/ Analog-Wandler 4 und die beiden Verstärker 5, 6 der Ansteuerungseinrichtung stellen eine Eingangsspannung mit einer bestimmten Frequenz für den Sensor 1 und für das Referenzbauelement zur Verfügung. Die Eingangsspannungen für den Sensor 1 und für das Referenzbauelement 2 sind identisch.

Der Sensor 1 weist eine Spulenanordnung 14 und einen gegenüber der Spulenanordnung 14 verschiebbaren Kern 15 auf. Der Kern ist mit einem in der Zeichnung nicht dargestellten, beweglichen Tastelement verbunden. Eine Positionsänderung des Kerns führt zu einem analogen Messsignal, das mit dem Verstärker 7 verstärkt, mit dem Filter 9 gefiltert und mit dem Analog/ Digital-Wandler 11 in ein digitales Signal umgewandelt wird. Dieses wird an den Prozessor 13 weitergeleitet.

Das elektrische Referenzbauelement 2 ist ein Transformator. Dieser weist eine Spulenanordnung 16 mit einem Kern 17 auf, wobei der Kern 17 nicht gegenüber der Spulenanordnung 16 beweglich ist. Die Induktivität der Spulenanordnung 16 stimmt im wesentlichen mit der Induktivität der Spulenanordnung 14 des Sensors überein. Das Referenzbauelement wandelt die analoge Eingangsspannung in eine analoge Ausgangsspannung um. Das Verhältnis von Eingangsspannung zu Ausgangsspannung hängt von der Spulenanordnung des Transformators ab. Die Ausgangsspannung wird mit dem Verstärker 8 verstärkt, mit dem Filter 10 gefiltert und mit dem Analog/ Digital-Wandler 12 in ein digitales Signal umgewandelt. Diese wird an den Prozessor 13 weitergeleitet.

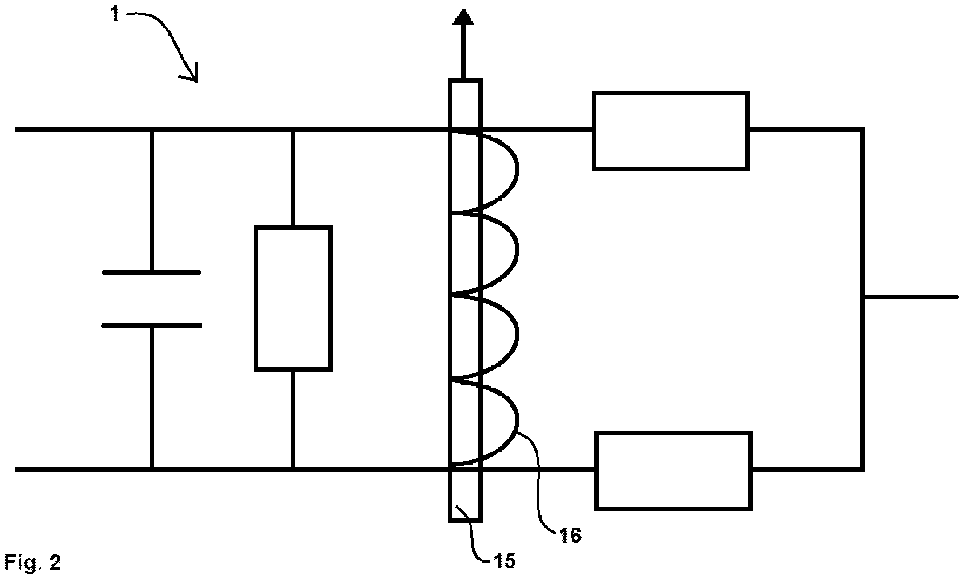

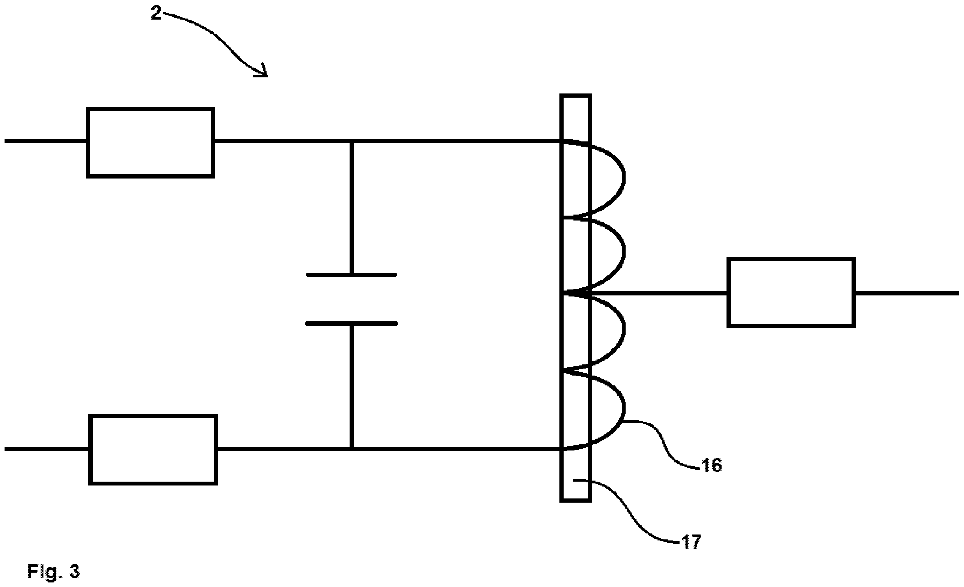

In Figur 2 ist ein Schaltplan des Sensors 1 mit seinen elektrischen Eigenschaften dargestellt. In Figur 3 ist das Referenzbauelement 2 mit seinen elektrischen Eigenschaften dargestellt.

Der Prozessor 13 berechnet aus dem Messsignal und der Ausgangsspannung des Referenzbauelements ein Messergebnis. Dabei wird davon ausgegangen, dass das Messsignal und die Ausgangsspannung des Referenzbauelements von Störeffekten beeinflusst werden. Es wird angenommen, dass das Messsignal $U_{mess}$ des Sensors zu einem bestimmten Messzeitpunkt ti der Summe aus einem Mittelwert aus mehreren Messsignalen zu verschiedenen Messzeitpunkten und den Störeffekten nmess entspricht:

$$U_{mess} (t_1) = \text{Mittelwert} (U_{mess}) + n_{mess}$$

Entsprechendes wird für die Ausgangsspannung $U_{refenz}$ des Referenzbauelements zu dem gleichen Messzeitpunkt ti angenommen. Es wird davon ausgegangen, dass $U_{refenz} (t_1)$ der Summe aus einem Mittelwert aus mehreren Ausgangsspannungen des Referenzbauelements zu verschiedenen Messzeitpunkten und den Störeffekten nreferenz ist:

$$U_{referenz} (t_1) = \text{Mittelwert} (U_{referenz}) + n_{referenz}$$

Der Mittelwert aus mehreren Ausgangsspannungen des Referenzbauelements wird über eine Anzahl von Messzeitpunkten gebildet. Dieser Mittelwert entspricht dem Referenzwert.

Es wird davon ausgegangen, dass die Störeffekte nmess und nreferenz durch die Summe der Störeffekte der einzelnen Bauteile vorgegeben sind:

$$n_{mess}^2 = n_{sensor}^2 + n_{verstärker1}^2 + n_{ADC1}^2$$

und

$$n_{referenz}^2 = n_{bauteil}^2 + n_{verstärker2}^2 + n_{ADC2}^2$$

wobei $n_{sensor}$ die Störeffekte des Sensors 1, $n_{verstärker1}$ die Störeffekte des Verstärkers 7 und des Filters 9, $n_{ADC1}$ die Störeffekte des Analog/ Digital-Wandlers 11, $n_{bauteil}$ die Störeffekte des Referenzbauteils 2, $n_{verstärker2}$ die Störeffekte des Verstärkers 8 und des Filters 10 und $n_{ADC2}$ die Störeffekte des Analog/ Digital-Wandlers 12 sind. Da der Sensor 1 und das Referenzbauelement hinsichtlich ihrer elektrischen Eigenschaften näherungsweise übereinstimmen, wird angenommen dass die Störeffekte $n_{sensor}$ des Sensors 1 und die Störeffekte $n_{bauteil}$ des Referenzbauteils 2 im wesentlichen übereinstimmen:

$$n_{sensor} = n_{bauteil}$$

Ferner wird angenommen, dass

$$n_{sensor} \gg n_{verstärker}, n_{ADC}$$

Der Prozessor errechnet damit aus der Differenz zwischen der Ausgangsspannung des Referenzbauelements zu einem Messzeitpunkt ti und dem Referenzwert die Störeffekte $n_{referenz}$. Diese Störeffekte $n_{referenz}$ werden anschließend vom Messsignal abgezogen. Das Ergebnis ist das Messergebnis.

Sämtliche Merkmale der Erfindung können sowohl einzeln als auch in beliebiger Kombination miteinander erfindungswesentlich sein.

Bezugszahlen

| 1 | Sensor |
|---|---|
| 2 | Referenzbauelement |
| 3 | Spannungsquelle |
| 4 | Digital/ Analog-Wandler |
| 5 | Verstärker |
| 6 | Verstärker |
| 7 | Verstärker |
| 8 | Verstärker |
| 9 | Filter |
| 10 | Filter |
| 11 | Analog/ Digital-Wandler |
| 12 | Analog/ Digital-Wandler |
| 13 | Prozessor |
| 14 | Spulenanordnung |
| 15 | Kern |
| 16 | Spulenanordnung |
| 17 | Kern |

**Patentansprüche**

1. Verfahren zum Betreiben eines induktiven Messtasters, welcher ein Tastelement, einen Sensor (1) mit einer Spulenanordnung (14) und einem mit dem Tastelement verbundenen, gegenüber der Spulenanordnung (14) beweglichen Kern (15), ein Referenzbauelement (2), welches eine analoge Eingangsspannung in eine analoge Ausgangsspannung umwandelt, eine Ansteuerungseinrichtung, welche eine identische analoge Eingangsspannung für den Sensor (1) und das Referenzbauelement (2) erzeugt und eine Verarbeitungseinrichtung, welche das analoge Messsignal des Sensors (1) und die analoge Ausgangsspannung des Referenzbauelements (2) zu einem Messergebnis verknüpft, aufweist, **gekennzeichnet durch** folgende Verfahrensschritte:

Erfassen eines Messsignals mit dem Sensor (1) zu verschiedenen Messzeitpunkten,
zeitgleiches Erfassen der Ausgangsspannung des Referenzbauelements (2) zu jedem der Messzeitpunkte,
Bilden eines Referenzwertes oder einer Referenzfunktion aus den Ausgangsspannungen mehrerer Messpunkte des Referenzbauelements,
wobei der Referenzwert als Mittelwert der Ausgangsspannungen des Referenzbauelements zu mehreren Messzeitpunkten gebildet wird,

Korrektur des Messsignals des Sensors zu jedem Messzeitpunkt um einen von Störeffekten abhängigen Korrekturwert, der aus der Ausgangsspannung des Referenzbauelements zu dem gleichen Messzeitpunkt und aus dem Referenzwert bestimmt wird, oder Korrektur des Messsignals des Sensor zu jedem Messzeitpunkt um eine von Störeffekten abhängige Korrekturfunktion, die aus der Ausgangsspannung des Referenzbauelements zu dem gleichen Messzeitpunkt und aus dem Referenzwert oder der Referenzfunktion bestimmt wird.

2. Verfahren nach Anspruch 1, **dadurch gekennzeichnet, dass** der Korrekturwert des Messsignals zu einem Messzeitpunkt als Differenz aus dem Referenzwert und der Ausgangsspannung des Referenzbauelements zu dem gleichen Messzeitpunkt gebildet wird.

3. Verfahren nach Anspruch 2, **dadurch gekennzeichnet, dass** zur Korrektur des Messsignals des Sensors (1) zu einem Messzeitpunkt der zu dem gleichen Messzeitpunkt bestimmte Korrekturwert von dem Messsignal abgezogen wird.

4. Verfahren nach einem der Ansprüche 1 bis 3, **dadurch gekennzeichnet, dass** das Messsignal des Sensors (1) und die Ausgangsspannung des Referenzbauelements (2) durch zwei identische Verstärker (7, 8) verstärkt werden, deren Störeffekte klein sind gegenüber den Störeffekten des Sensors (1).

5. Verfahren nach einem der Ansprüche 1 bis 4, **dadurch gekennzeichnet, dass** das Messsignal des Sensors (1) und die Ausgangsspannung des Referenzbauelements (2) durch zwei identische Filter (9, 10) gefiltert werden, dass die Störeffekte des Filters aus der Ausgangsspannung des Referenzbauelements (2) bestimmt und aus dem Messsignal des Sensors (1) eliminiert werden.

6. Verfahren nach einem der Ansprüche 1 bis 5, **dadurch gekennzeichnet, dass** das Messsignal des Sensors (1) und die Ausgangsspannung des Referenzbauelements (2) durch zwei identische Analog/ Digital-Wandler (11, 12) zeitgleich gewandelt werden, dass die Störeffekte der Analog/ Digital-Wandler (11, 12) aus der Ausgangsspannung des Referenzbauelements (2) bestimmt und aus dem Messsignal des Sensors (1) eliminiert werden.

**Claims**

1. Method for operating an inductive measurement probe, which comprises a probe element, a sensor (1) having a coil arrangement (14) and a core (15) which is connected to the probe element and which is movably arranged in relation to the coil arrangement (14), a reference component (2) which converts an analog input voltage into an analog output voltage, a drive device which generates an identical analog input voltage for the sensor (1) and the reference component (2) and a processing device which combines the analog measurement signal of the sensor (1) and the analog output voltage of the reference component (2) into a measurement result, **characterised by** the following process steps:

detection of a measurement signal with the sensor (1) at various measuring times,
simultaneous detection of the output voltage of the reference component (2) at each of the measuring times,
formation of a reference value or a reference function from the output voltages of several measuring points of the reference component,
wherein the reference value is formed as the mean value of the output voltages of the reference component at several measuring times,
correction of the measurement signal of the sensor at every measuring time by a correction value dependent on disturbing effects and determined from the output voltage of the reference component at the same measuring time and from the reference value, or correction of the measurement signal of the sensor at every measuring time by a correction function dependent on disturbing effects and determined from the output voltage of the reference component at the same measuring time and from the reference value or the reference function.

2. Method according to claim 1, **characterised in that** the correction value of the measurement signal at a measuring time is formed as the difference between the reference value and the output voltage of the reference component at the same measuring time.

3. Method according to claim 2, **characterised in that** to correct the measurement signal of the sensor (1) at a measuring time the correction value determined at the same measuring time is deducted from the measurement signal.

**4.** Method according to one of claims 1 to 3, **characterised in that** the measurement signal of the sensor (1) and the output voltage of the reference component (2) are amplified by two identical amplifiers (7, 8) having low disturbing effects compared with the disturbing effects of the sensor (1).

**5.** Method according to one of claims 1 to 4, **characterised in that** the measurement signal of the sensor (1) and the output voltage of the reference component (2) are filtered by two identical filters (9, 10), that the disturbing effects of the filter from the output voltage of the reference component (2) are determined and eliminated from the measurement signal of the sensor (1).

**6.** Method according to one of claims 1 to 5, **characterised in that** the measurement signal of the sensor (1) and the output voltage of the reference component (2) are converted simultaneously by two identical analog/digital converters (11, 12), that the disturbing effects of the analog/digital converters (11, 12) are determined from the output voltage of the reference component (2) and eliminated from the measurement signal of the sensor (1).

## Revendications

**1.** Procédé permettant de faire fonctionner un palpeur de mesure inductif qui comprend un élément de palpage, un capteur (1) avec une structure de bobine (14) et un noyau (15) mobile par rapport à la structure de bobine (14), qui est relié à l'élément de palpage, un composant de référence (2), qui transforme une tension d'entrée analogique en tension de sortie analogique, un dispositif de commande, qui génère une tension d'entrée analogique identique pour le capteur (1) et le composant de référence (2), et un système de traitement associant le signal de mesure analogique du capteur (1) et la tension de sortie analogique du composant de référence (2) en un résultat de mesure. Ce procédé est **caractérisé par** les étapes suivantes:

Relevé d'un signal de mesure avec le capteur (1) à différents moments,
Relevé simultané de la tension de sortie du composant de référence (2) à chaque moment de mesure,
Formation d'une valeur de référence ou d'une fonction de référence à partir des tensions de sortie de plusieurs points de mesure du composant de référence, la valeur de référence étant formée comme moyenne des tensions de sortie du composant de référence à différents moments de mesure,
Correction du signal de mesure du capteur à chaque moment de mesure sur la base d'une valeur qui dépend des effets perturbateurs et est déterminée à partir de la tension de sortie du composant de référence au même moment de mesure de même qu'à partir de la valeur de référence, ou correction du signal de mesure du capteur à chaque moment de mesure sur la base d'une fonction qui dépend des effets perturbateurs et est déterminée à partir de la tension de sortie du composant de référence au même moment de mesure, de même qu'à partir de la valeur de référence ou de la fonction de référence.

**2.** Procédé selon la revendication 1, **caractérisé par le fait que** la valeur de correction du signal de mesure à un moment de mesure est formée comme différence à partir de la valeur de référence et de la tension de sortie du composant de référence au même moment de mesure.

**3.** Procédé selon la revendication 2, **caractérisé par le fait que** la correction du signal de mesure du capteur (1) à un moment de mesure s'opère en soustrayant du signal de mesure la valeur de correction déterminée au même moment de mesure.

**4.** Procédé selon l'une des revendications 1 à 3, **caractérisé par le fait que** le signal de mesure du capteur (1) et la tension de sortie du composant de référence (2) sont amplifiés par deux amplificateurs (7, 8) identiques, dont les effets perturbateurs sont minimes par rapport à ceux du capteur (1).

**5.** Procédé selon l'une des revendications 1 à 4, **caractérisé par le fait que** le signal de mesure du capteur (1) et la tension de sortie du composant de référence (2) sont filtrés par deux filtres (9, 10) identiques, que les effets perturbateurs du filtre sont déterminés à partir de la tension de sortie du composant de référence (2) et éliminés du signal de mesure du capteur (1).

**6.** Procédé selon l'une des revendications 1 à 5, **caractérisé par le fait que** le signal de mesure du capteur (1) et la tension de sortie du composant de référence (2) sont transformés par deux convertisseurs analogiques/numériques (11, 12) identiques de façon simultanée, que les effets perturbateurs des convertisseurs analogiques/numériques (11, 12) sont déterminés à partir de la tension de sortie du composant de référence (2) et éliminés du signal de mesure du capteur (1).

EP 3 074 726 B1

Fig. 1

10

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4031931 A1
- US 7482803 B2
- EP 1058094 A2
- US 7538544 B2
- DE 4033252 A1
- DE 10322447 A1